# EUROPÄISCHE PATENTSCHRIFT

(11) **EP 3 831 586 B1**
(45) Veröffentlichungstag und Bekanntmachung des Hinweises auf die Patenterteilung: **02.08.2023**
(21) Anmeldenummer: 20203828.7
(22) Anmeldetag: 26.10.2020
(51) Int. Cl.: B29D 23/00, B29C 63/10, B29C 63/00, F16L 11/127

(54) **VERFAHREN ZUR HERSTELLUNG EINES BEHEIZBAREN SCHLAUCHES UND FIXIERVORRICHTUNG HIERFÜR**
METHOD FOR PRODUCING A HEATABLE HOSE AND FIXING DEVICE FOR THAT PURPOSE
PROCÉDÉ DE FABRICATION D'UN TUYAU CHAUFFABLE ET DISPOSITIF DE FIXATION ASSOCIÉ

(30) Priorität: 04.12.2019 DE 102019218844
(43) Veröffentlichungstag der Anmeldung: 09.06.2021
(73) Patentinhaber: ContiTech Schlauch GmbH, 30165 Hannover (DE)
(72) Erfinder: Grib, Alexej - c/o Continental AG, 30419 Hannover (DE); Borchert, Lukas - c/o Continental AG, 30419 Hannover (DE); Dude, Holger - c/o Continental AG, 30419 Hannover (DE); Koch, Harald - c/o Continental AG, 30419 Hannover (DE)
(74) Vertreter: Continental Corporation

(56) Entgegenhaltungen:
- WO-A1-2015/161930
- DE-A1-102013 000 588
- JP-A- H04 129 962

## Beschreibung

Die vorliegende Erfindung betrifft ein Verfahren zur Herstellung eines beheizbaren Schlauches, vgl. Patentanspruch 1, sowie eine Fixiervorrichtung zur Ausführung eines derartigen Verfahrens, vgl. Patentanspruch 5.

Auf dem Gebiet der Hohlkörper zum Transport bzw. zur Speicherung von flüssigen, gasförmigen oder pastösen Medien sind verschiedene Anwendungen bekannt, bei denen die Hohlkörper elektrisch beheizbar sind. Hierdurch kann z.B. bei dem Transport bzw. bei der Speicherung eine vorbestimmte Temperatur erreicht werden. Ferner ist dies insbesondere dann von Bedeutung, wenn Medien in den Hohlkörpern transportiert bzw. gespeichert werden sollen, bei denen die Gefahr besteht, dass sie während des Einsatzes einfrieren können, wodurch der Transport durch den Hohlkörper bzw. Abtransport aus dem Hohlkörper verhindert werden könnte. Sich länglich erstreckende Hohlkörper aus einem relativ unflexiblen Material wie z.B. Metall wie z.B. Aluminium können als Rohre bezeichnet werden, sich länglich erstreckende Hohlkörper aus einem relativ flexiblen Material wie z.B. einem elastomeren Material wie z.B. Gummi oder aus einem Kunststoff als Schläuche.

Dies betrifft z.B. Schläuche zum Transport von Wasser bzw. wässrigen Medien, zu denen auch Harnstoffe (Marke "AdBlue") gehören, welche in Kraftfahrzeugen mit Dieselmotoren zur Reduktion des Stickstoffgehalts im Abgas verwendet werden (SCR-Schlauch-Technologie - selective catalytic reduction). Auch für Anwendungen zum Transport bzw. zur Speicherung hochviskoser Medien wie z.B. Öle kann es sinnvoll sein, durch Erwärmen des Mediums die Viskosität des Mediums zu verringern und damit den Transport des Mediums zu erleichtern.

Die beschriebenen technischen Lösungen hierzu beruhen i. Allg. auf der Integration von Heizleitern in Form von Widerstandsheizleitern in die Konstruktion der Hohlkörper. Die Beheizung erfolgt üblicherweise durch zwei am Umfang aufgebrachte Litzen, welche an den Leitungsenden einseitig kurzgeschlossen und an der gegenüberliegenden Seite elektrisch angeschlossen werden.

Derartige längliche Hohlkörper in Form von Schläuchen werden üblicherweise endlos gefertigt. Auf einen Grundkörper z.B. aus Kunststoff werden üblicherweise zwei Litzen als Heizleiter spiralförmig aufgebracht und anschließend durch eine Außenschicht in Form z.B. eines ebenfalls spiralförmig aufgewickelten Bandes oder einer extrudierten Schicht fixiert. Für die elektrische Anbindung der Heizleiter können diese an den Leitungsenden freigelegt werden.

So beschreibt beispielsweise die DE 10 2012 002 411 A1 eine beheizbare Medienleitung in Form eines Schlauches mit einem Heizelement aus Widerstandslitzen. Auf die Außenseite einer Medienleitung wird ein Druckträger z.B. als Gewebe, Gelege, Geflecht, Spiralwicklung oder dergleichen aufgewickelt bzw. aufgebracht. An der Außenseite des Druckträgers werden dann die Litzen durch spiralförmiges Wickeln aufgebracht und nachfolgend auf dem Druckträger fixiert oder befestigt. Dies kann beispielsweise durch ein kontinuierliches Umwickeln mit einem Klebe-, Gewebeklebe- oder Gewebeband erfolgen, wodurch eine Außenschicht gebildet wird.

Eine derartige beheizbare Medienleitung kann endlos gefertigt, abgelängt und auf einem Coil aufgewickelt werden. Von diesem Coil können dann zur Herstellung von beheizbaren Medienleitungen der gewünschten Längen Abschnitte abgewickelt und abgelängt, d.h. in der gewünschten Länge abgetrennt, werden. Von beiden Enden der beheizbaren Medienleitung wird nun die Außenschicht entfernt. Es werden nun die Litzenpaare abgewickelt und der litzenfreie Abschnitt der Medienleitung abgeschnitten. Die überstehenden Litzen können dann einseitig kurzgeschlossen verbunden werden. An dem gegenüberliegenden Ende können die überstehenden Litzen elektrisch leitfähig mit einer Spannungsquelle verbunden werden, um ein elektrisches Beheizen der beheizbaren Medienleitung zu ermöglichen.

Bei der beheizbaren Medienleitung der DE 10 2012 002 411 A1 muss somit die zuvor aufgebrachte Außenschicht an den Enden entfernt werden. Beim Entfernen der Außenschicht können die Heizleiter und auch der Druckträger und die Medienleitung beschädigt werden.

Die WO 2015/161930 A1 betrifft eine mehrteilige beheizbare Medienleitung sowie ein Verfahren zum Herstellen einer solchen Medienleitung.

Die DE 102 01 920 B4 betrifft einen flexiblen, mehrschichtigen, beheizbaren Schlauch auf dem Gebiet der SCR-Schlauch-Technologie mit eingespultem Widerstands-Heizleiter oberhalb der Festigkeitsträgerschicht und unterhalb der äußeren Gummischicht. In diesem Fall ist eine elastomere Außenschicht derart ausgebildet, dass die Enden der Heizleiter durch eine radial nach außen einwirkende Kraft unter Durchtrennen der elastomeren Außenschicht, aber ohne Schädigung der metallischen Seele und der Ummantelung des Heizleiters, freigelegt und unmittelbar mit einer elektrischen Anschlussvorrichtung elektrisch verbunden werden können. Der von dem Heizleiter befreite Abschnitt des Schlauches kann ebenfalls abgeschnitten werden.

Das radiale Herausziehen des Heizleiters durch die elastomere Außenschicht hindurch kann einen gewissen Kraftaufwand für eine Person erfordern und somit umständlich und anstrengend sein. Auch kann es dennoch zu einem Reißen oder zu einer Beschädigung des Heizleiters kommen.

Eine Aufgabe der vorliegenden Erfindung ist es, eine Möglichkeit zu schaffen, elektrische Leiter beheizbarer Schläuche der eingangs beschriebenen Art auf einfachere Art und Weise zugänglich zu machen als bisher bekannt. Insbesondere soll auf den Arbeitsschritt des Freilegens der elektrischen Leiter wie zuvor beschrieben verzichtet werden können. Zumindest soll eine Alternative zu den bekannten Möglichkeiten geschaffen werden.

Die Aufgabe wird erfindungsgemäß durch ein Verfahren mit den Merkmalen gemäß Patentanspruch 1 sowie durch eine Fixiervorrichtung mit den Merkmalen gemäß Patentanspruch 6 gelöst. Vorteilhafte Weiterbildungen sind in den Unteransprüchen beschrieben.

Somit betrifft die vorliegende Erfindung ein Verfahren zur Herstellung eines beheizbaren Schlauches mit wenigstens den Schritten:
- Bereitstellen eines Grundkörpers,
- Aufbringen wenigstens eines elektrischen Leiters auf den Grundkörper entlang einer Längsachse und
- Aufbringen eines Fixierelements auf den Grundkörper mit dem elektrischen Leiter entlang der Längsachse, wobei das Aufbringen des Fixierelements auf den Grundkörper und den elektrischen Leiter an einer ersten Position unterbrochen und an einer zweiten Position fortgesetzt wird,
   - Trennen des beheizbaren Schlauches an einer dritten Position entlang der Längsachse, wobei die dritte Position entlang der Längsachse zwischen der ersten Position und der zweiten Position liegt.

Das Aufbringen kann jeweils insbesondere geradlinig entlang der Längsachse oder spiralförmig entlang der Längsachse erfolgen, wobei ein spiralförmiges Aufbringen durch Umwickeln zu bevorzugen sein kann, wie weiter unten noch näher beschrieben werden wird. Ggfs. können auch zwei elektrische Leiter auf den Grundkörper entlang der Längsachse aufgebracht werden.

Das Verfahren umfasst, dass das Aufbringen des Fixierelements auf den Grundkörper und den elektrischen Leiter an einer ersten Position unterbrochen und an einer zweiten Position fortgesetzt wird. Mit anderen Worten kann der beheizbare Schlauch direkt bei seiner Herstellung bereits mit Abschnitten zwischen der ersten und zweiten Position vorgesehen werden, welche frei von dem Fixierelement sind, so dass das Fixierelement in diesem Abschnitt gar nicht mehr entfernt werden muss, um den elektrischen Leiter freizulegen. Dies kann den entsprechenden Aufwand sparen und somit die Herstellung vereinfachen, beschleunigen sowie kostengünstiger werden lassen. Auch können Beschädigungen und dergleichen des elektrischen Leiters vermieden werden.

Erfindungsgemäß umfasst das Verfahren den Schritt:
- Trennen des beheizbaren Schlauches an einer dritten Position entlang der Längsachse,
wobei die dritte Position entlang der Längsachse zwischen der ersten Position und der zweiten Position liegt.

Auf diese Art und Weise kann bereits während des Verfahrens ein Zuschneiden des beheizbaren Schlauches auf eine gewünschte Länge erfolgen, so dass ein entsprechender anschließender Schritt des Ablängens von einem endlos hergestellten beheizbaren Schlauch wie bisher bekannt eingespart werden kann. Hierbei kann auch die Länge des freiliegenden elektrischen Leiters berücksichtigt werden, welcher anschließend von dem Grundkörper abgewickelt und verwendet werden kann.

Gemäß einem weiteren Aspekt der Erfindung liegt die dritte Position entlang der Längsachse mittig zwischen der ersten Position und der zweiten Position. Hierdurch können entlang der Längsachse gleichlange Abschnitte mit freiliegenden elektrischen Leitern beidseitig der dritten Position geschaffen werden, so dass auch die von dem Grundkörper abgewickelten elektrischen Leiter gleich lang sein können. Dies kann jeweils die weitere Verarbeitung begünstigen.

Gemäß einem weiteren Aspekt der Erfindung entspricht die erste Position der Länge eines herzustellenden beheizbaren Schlauches. Mit anderen Worten können von dem herzustellenden beheizbaren Schlauch fortlaufend Schlauchabschnitt wie zuvor beschrieben abgetrennt werden, welche jeweils ein Zwischenprodukt darstellen, welches anschließend z.B. durch das endseitige Aufbringen von Abschluss- und Verbindungselementen zum fertigen Produkt weiterverarbeitet werden kann. Bei diesem Trennen kann jeweils, wie zuvor beschrieben, die Länge der Abschnitte des freiliegenden elektrischen Leiters berücksichtigt werden. Hierdurch können die Schlauchabschnitte direkt auf Länge geschnitten werden anstelle, wie bisher bekannt, zunächst in einem Verfahren den endlosen beheizbaren Schlauch herzustellen, aufzuwickeln und in einem anschließenden Verfahren diesen abzulängen.

Gemäß einem weiteren Aspekt der Erfindung entspricht der Abstand zwischen der ersten Position und der zweiten Position der doppelten Länge eines freizulegenden Abschnitts des elektrischen Leiters. Dies kann die Umsetzung der zuvor beschriebenen Eigenschaften und Vorteile begünstigen.

Die vorliegende Erfindung betrifft auch eine Fixiervorrichtung zur Herstellung eines beheizbaren Schlauches mittels eines Verfahrens wie zuvor beschrieben mit einem Aufbringelement, welches ausgebildet ist, ein Fixierelement auf einen Grundkörper mit einem elektrischen Leiter des beheizbaren Schlauches entlang einer Längsachse aufzubringen.

Die Fixiervorrichtung weist ein Trennelement auf, welches ausgebildet ist, das Fixierelement zu durchtrennen, wobei das Aufbringelement ausgebildet ist, das Aufbringen des Fixierelements zu unterbrechen. Hierdurch kann eine Vorrichtung geschaffen werden, um die zuvor beschrieben Eigenschaften und Vorteile des erfindungsgemäßen Verfahrens umsetzen und nutzen zu können.

Gemäß einem Aspekt der Erfindung ist das Aufbringelement ausgebildet, auf dem Grundkörper mit dem elektrischen Leiter aufgesetzt und von dem Grundkörper mit dem elektrischen Leiter abgehoben zu werden. Hierdurch kann ein ausreichender Kontakt zwischen dem Fixierelement und dem Grundkörper mit dem elektrischen Leiter seitens des Aufbringelements während des Aufbringens ermöglicht werden, so dass das Fixierelement sicher aufgebracht werden kann. Dies kann beispielsweise seitens des Aufbringelements mittels einer Rolle oder dergleichen erfolgen, welche z.B. mittels eines Federelements einen ausreichenden Druck radial von außen auf das Fixierelement beim Aufbringen ausüben kann. Durch eine Bewegung des Aufbringelements weg von der Oberfläche des Grundkörpers mit dem elektrischen Leiter kann dies unterbleiben, während das Aufbringen unterbrochen wird. Hierbei kann das abgeschnittene, lose Ende des Fixierelements auch von dem Aufbringelement gehalten werden, um wieder aufgebracht werden zu können. Die Wirkung bzw. Bewegung des Aufbringelements gegenüber dem Grundkörper mit dem elektrischen Leiter kann vorzugsweise radial erfolgen.

Gemäß einem weiteren Aspekt der Erfindung erfolgt das Aufbringen des Fixierelements seitens des Aufbringelements als Umwickeln. Mit anderen Worten wird das Fixierelement durch eine kombinierte Bewegung rotatorisch um die Längsachse herum und transversal entlang der Längsachse beim Aufbringen spiralförmig auf den Grundkörper mit dem elektrischen Leiter appliziert. Dies kann einen sicheren Halt des Fixierelement auf dem Grundkörper mit dem elektrischen Leiter begünstigen. Dies kann gleichzeitig vergleichsweise einfach erfolgen.

Gemäß einem weiteren Aspekt der Erfindung ist die Fixiervorrichtung ausgebildet, den Grundkörper mit dem elektrischen Leiter relativ zu sich oder sich relativ zu dem Grundkörper mit dem elektrischen Leiter entlang der Längsachse zu bewegen. Mit anderen Worten kann eine Relativbewegung zwischen der Fixiervorrichtung und dem Grundkörper mit dem elektrischen Leiter ermöglicht werden, so dass das Aufbringen des Fixierelements entlang der Längsachse ermöglicht werden kann.

Gemäß einem weiteren Aspekt der Erfindung sind das Aufbringelement und das Trennelement als gemeinsame Fixiereinheit ausgebildet, wobei die Fixiereinheit ausgebildet ist, um den Grundkörper mit dem elektrischen Leiter zu rotieren. Dies kann den Aufbau der Fixiervorrichtung insgesamt vereinfachen. Auch kann die Anordnung und Ausrichtung von Aufbringelement und Trennelement zueinander sichergestellt werden; auch dies kann dabei vergleichsweise einfach erfolgen.

Ein Ausführungsbeispiel und weitere Vorteile der Erfindung werden nachstehend im Zusammenhang mit den folgenden Figuren erläutert. Darin zeigt:
- Fig. 1: eine schematische Darstellung eines erfindungsgemäß hergestellten beheizbaren Schlauches; und
- Fig. 2: eine schematische Darstellung einer erfindungsgemäßen Fixiervorrichtung bei der erfindungsgemäßen Herstellung eines beheizbaren Schlauches.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U.

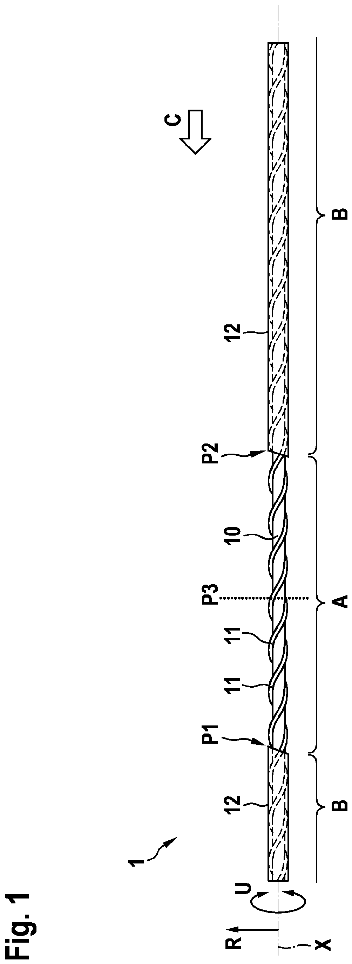

Fig. 1 zeigt eine schematische Darstellung eines erfindungsgemäß hergestellten beheizbaren Schlauches 1. Der beheizbare Schlauch 1 erstreckt sich im Wesentlichen entlang der Längsachse X und weist einen Grundkörper 10 in Form eines dünnwandigen Rohrs 10 aus Kunststoff auf, welches in einem vorangehenden Verfahren hergestellt und für die Ausführung des erfindungsgemäßen Verfahrens zur Verfügung gestellt wird.

Auf diesen zylindrischen Grundkörper 10 ist im Rahmen des erfindungsgemäßen Verfahrens ein elektrischer Leiter 11 in Form einer Litze 11 gewickelt worden. Anschließend ist im Rahmen des erfindungsgemäßen Verfahrens auf den Grundkörper 10 mit der Litze 11 ein Fixierelement 12 in Form eines Bandes 12, welches auch als Tape 12 bezeichnet werden kann, gewickelt worden, um die Litze 11 auf dem Grundkörper 10 zu fixieren.

Erfindungsgemäß ist dabei das Aufbringen bzw. das Umwickeln des Tapes 12 jedoch nicht, wie bisher bekannt, durchgängig entlang der Längsachse X über die gesamte Länge des herzustellenden beheizbaren Schlauchs 1 erfolgt, sondern das Umwickeln ist an vorbestimmten Stellen des Grundkörpers 10 mit der Litze 11 unterbrochen worden. Hierzu wurde das Umwickeln an einer ersten Position P1 beendet und das Tape 12 durchtrennt. An einer zweiten Position P2 wurde das Umwickeln wieder fortgesetzt.

Hierdurch weist der beheizbare Schlauch 1 fixierte bzw. getapte Abschnitte B auf, wo der Grundkörper 10 mit der Litze 11 von dem Tape 12 umwickelt ist, sowie unfixierte Abschnitte A, wo der Grundkörper 10 mit der Litze 11 nicht von dem Tape 12 umwickelt ist und somit die Litze 11 nach außen hin freiliegt. Dies hat den Vorteil, dass die Litze 11 in den unfixierten Abschnitten A in einem nachfolgenden Verfahrensschritt nicht von dem Tape 12 freigelegt werden muss.

Die erste Position P1 ist dabei derart gewählt, dass sie der Länge eines herzustellenden Schlauchabschnitts entspricht, welcher ohne weitere Kürzung in dieser Länge weiterverarbeitet werden kann.

Im Rahmen des erfindungsgemäßen Verfahrens erfolgt dabei auch ein Trennen des beheizbaren Schlauches 1 an einer dritten Position P3 entlang der Längsachse X, so dass der herzustellende beheizbare Schlauch 1 gleich auf die richtige Länge geschnitten werden kann. Dabei ist der Abstand entlang der Längsachse X zwischen der ersten Position P1 und der dritten Position P3 derart gewählt, dass die von diesem Teil des unfixierten Abschnitts A abgewickelte Litze 11 genau die gewünschte Länge für die weitere Verarbeitung besitzt. Der von der Litze 11 befreite Abschnitt des Grundkörpers 10 kann dann abgetrennt werden. Dies gilt entsprechend für den Abstand entlang der Längsachse X zwischen der dritten Position P3 und der zweiten Position P2. Hieraus kann sich ergeben, dass die dritte Position P3 mittig zwischen der ersten Position P1 und der zweiten Position P2 angeordnet ist.

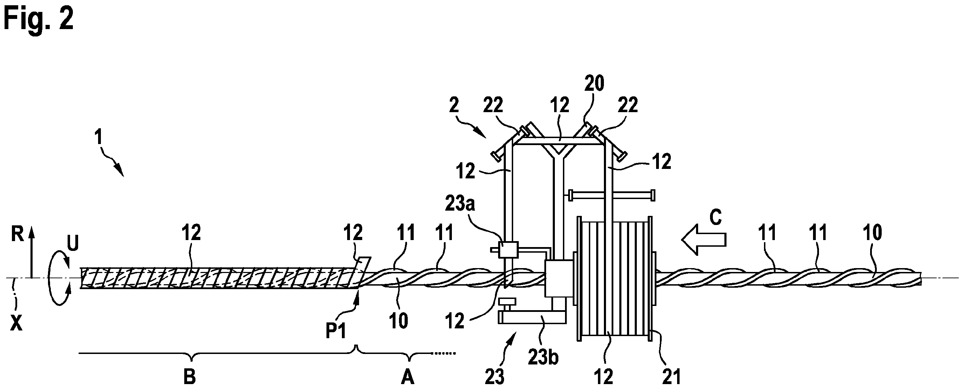

Fig. 2 zeigt eine schematische Darstellung einer erfindungsgemäßen Fixiervorrichtung 2 bei der erfindungsgemäßen Herstellung eines beheizbaren Schlauches 1.

Die Fixiervorrichtung 2 kann auch als Bandwickelvorrichtung 2 oder als Tapevorrichtung 2 bezeichnet werden.

Die Fixiervorrichtung 2 weist ein Gestell 20 auf, durch welches hindurch der Grundkörper 10 mit der Litze 11 entlang der Längsachse X geführt wird. Hierzu kann die Fixiervorrichtung 2 drehbar gegenüber der Umgebung (nicht dargestellt) angeordnet sein und der Grundkörper 10 mit der Litze 11 entlang der Längsachse X durch das Gestell 20 der Fixiervorrichtung 1 in einer Bewegungsrichtung C hindurchgeführt werden.

Die Fixiervorrichtung 2 weist ein Speicherelement 21 auf, welches das Tape 12 aufgewickelt bevorratet und daher auch als Tapetrommel 21 bezeichnet werden kann. Die Tapetrommel 21 ist an dem Gestell 20 um die Längsachse X rotierbar angeordnet, so dass das bevorratete Tape 12 von der Tapetrommel 21 abgewickelt werden kann. Der Grundkörper 10 mit der Litze 11 verläuft entlang der Längsachse X auch durch die Tapetrommel 21 hindurch.

Das von der Tapetrommel 21 abgewickelte Tape 12 wird über zwei Zuführungselemente 22 in Form von Umlenkrollen 22, welche jeweils gegenüber dem Gestell 20 drehbar sind, jeweils um 90° umgelenkt sowie entlang der Längsachse X in der Bewegungsrichtung C vor die Tapetrommel 21 gefördert. Von der zweiten Umlenkrolle 22 wird das abgewickelte Tape 12 radial einer Fixiereinheit 23 zugeführt, welche auch als Wickeleinheit 23 bezeichnet werden kann.

Die Wickeleinheit 23 weist ein Aufbringelement 23a in Form eines Wickelelements 23a sowie ein Trennelement 23b in Form eines Schneidelements 23b auf.

Das Wickelelement 23a stellt eine Halte- und Transporteinheit 23a für das Tape 12 dar, um das Tape 12 zu halten, zu führen und wickelnd auf den Grundkörper 10 mit der Litze 11 aufzubringen. Mittels des Wickelelements 23a kann das Tape 12 von radial außen auf den Grundkörper 10 mit der Litze 11 aufgedrückt und hierdurch beim Wickeln gespannt werden, um ein geführtes Umwickeln zu ermöglichen.

Das Schneidelement 23b stellt eine An- und Absetzeinheit 23b für das Tape 12 mit einer Schneide dar. Mittels des Schneideelements 23b kann das Tape 12 im Bereich zwischen dem Wickelelement 23a und dem Grundkörper 10 mit der Litze 11 durch Schneiden durchtrennt, von dem Grundkörper 10 mit der Litze 11 abgesetzt sowie wieder auf den Grundkörper 10 mit der Litze 11 aufgesetzt werden. Hierzu kann das Trennelement 23b entsprechend in den Verlauf des Tape 12 hinein bewegt werden. Das Tape 12 kann ferner von dem Wickelelement 23a gehalten werden, um nach dem Schneiden in Kontakt mit dem Wickelelement 23a zu bleiben.

Genauer gesagt bewegt sich beim Ansetzen des Tapes 12 auf den Grundkörper 10 mit der Litze 11 ein Arm des Schneidelements 23b radial zur Längsachse X und drückt das Tape 12 auf den Grundkörper 10 mit der Litze 11 an. Nach dem Ansetzen bewegt sich der Arm des Schneidelements 23b wieder radial zurück in die Ausgangsstellung. Beim Absetzen des Tapes 12 von dem Grundkörper 10 mit der Litze 11 bewegt sich der Arm des Schneidelements 23b radial zur Längsachse X und durchschneidet das Tape 12.

Auf diese Art und Weise kann das Tape 12 wie zuvor beschrieben an der ersten Position P1 von dem Schneidelement 23b durchtrennt werden, so dass bei der weiteren Bewegung des Grundkörpers 10 mit der Litze 11 entlang der Längsachse X in der Bewegungsrichtung C der unfixierte Abschnitt A geschaffen werden kann. Beim Schneiden kann gleichzeitig die Tapetrommel 21 angehalten und das abgeschnittene lose Ende des Tapes 12 von dem Wickelelement 23a gehalten werden. Auch die Rotationsbewegung der Fixiervorrichtung 2 um die Längsachse X kann angehalten werden.

Vor Erreichen der zweiten Position P2 kann die Fixiervorrichtung 2 wieder in Rotation um die Längsachse X versetzt werden. Von dem Wickelelement 23a wird dann an der zweiten Position P2 das lose Ende des Tapes 12 auf den Grundkörper 10 mit der Litze 11 aufgesetzt und dort angedrückt. Gleichzeitig wird das Tape 12 wieder von der rotierenden Tapetrommel 21 abgewickelt und dem Wickelelement 23a zugeführt. Hierdurch kann der unfixierte Abschnitt A beendet und ein weiterer fixierter bzw. getapter Abschnitt B des beheizbaren Schlauches 1 begonnen werden.

### Bezugszeichenliste (Teil der Beschreibung)

- A: unfixierter Abschnitt des beheizbaren Schlauches 1
- B: fixierter bzw. getapter Abschnitt des beheizbaren Schlauches 1
- C: Bewegungsrichtung
- P1: erste Position; Übergang von fixiertem Abschnitt B zu unfixiertem Abschnitt A
- P2: zweite Position; Übergang von unfixiertem Abschnitt A zu fixiertem Abschnitt B
- P3: dritte Position; Trennstelle des unfixierten Abschnitts A

- R: radiale Richtung
- U: Umfangsrichtung
- X: Längsachse

- 1: beheizbarer Schlauch
- 10: Grundkörper; Rohr
- 11: elektrische Leiter; Litze
- 12: Fixierelement; Band; Tape

- 2: Fixiervorrichtung; Bandwickelvorrichtung; Tapevorrichtung
- 20: Gestell
- 21: Speicherelement; Tapetrommel
- 22: Zuführungselemente; Umlenkrollen
- 23: Fixiereinheit; Wickeleinheit
- 23a: Aufbringelement; Wickelelement; Halte- und Transporteinheit des Tapes 12
- 23b: Trennelement; Schneidelement; An- und Absetzeinheit für Tape 12 mit Schneide

## Patentansprüche

1. Verfahren zur Herstellung eines beheizbaren Schlauches (1) mit wenigstens den Schritten:
Bereitstellen eines Grundkörpers (10),
Aufbringen wenigstens eines elektrischen Leiters (11) auf den Grundkörper (10) entlang einer Längsachse (X) und
Aufbringen eines Fixierelements (12) auf den Grundkörper (10) mit dem elektrischen Leiter (11) entlang der Längsachse (X),
wobei das Aufbringen des Fixierelements (12) auf den Grundkörper (10) und den elektrischen Leiter (11) an einer ersten Position (P1) unterbrochen und an einer zweiten Position (P2) fortgesetzt wird,
Trennen des beheizbaren Schlauches (1) an einer dritten Position (P3) entlang der Längsachse (X),
wobei die dritte Position (P3) entlang der Längsachse (X) zwischen der ersten Position (P1) und der zweiten Position (P2) liegt.

2. Verfahren nach Anspruch 1, **dadurch gekennzeichnet, dass**
die dritte Position (P3) entlang der Längsachse (X) mittig zwischen der ersten Position (P1) und der zweiten Position (P2) liegt.

3. Verfahren nach einem der vorangehenden Ansprüche, **dadurch gekennzeichnet, dass**
die erste Position (P1) der Länge eines herzustellenden beheizbaren Schlauches (1) entspricht.

4. Verfahren nach einem der vorangehenden Ansprüche, **dadurch gekennzeichnet, dass**
der Abstand zwischen der ersten Position (P1) und der zweiten Position (P2) der doppelten Länge eines freizulegenden Abschnitts des elektrischen Leiters (11) entspricht.

5. Fixiervorrichtung (2) zur Herstellung eines beheizbaren Schlauches (1) mittels eines Verfahrens nach einem der vorangehenden Ansprüche
mit einem Aufbringelement (23a), welches ausgebildet ist, ein Fixierelement (12) auf einen Grundkörper (10) mit einem elektrischen Leiter (11) des beheizbaren Schlauches (1) entlang einer Längsachse (X) aufzubringen,
ferner mit einem Trennelement (23b), welches ausgebildet ist, das Fixierelement (12) zu durchtrennen,
wobei das Aufbringelement (23a) ausgebildet ist, das Aufbringen des Fixierelements (12) zu unterbrechen.

6. Fixiervorrichtung (2) nach Anspruch 5, **dadurch gekennzeichnet, dass** das Aufbringelement (23a) ausgebildet ist, auf dem Grundkörper (10) mit dem elektrischen Leiter (11) aufgesetzt und von dem Grundkörper (10) mit dem elektrischen Leiter (11) abgehoben zu werden.

7. Fixiervorrichtung (2) nach Anspruch 5 oder 6, **dadurch gekennzeichnet, dass**
das Aufbringelement dazu ausgebildet ist, das Fixierelement (12) auf den Grundkörper (10) mit dem elektrischen Leiter (11) des beheizbaren Schlauches (1) als Umwickeln aufzubringen.

8. Fixiervorrichtung (2) nach einem der Ansprüche 5 bis 7, **dadurch gekennzeichnet, dass**
die Fixiervorrichtung (2) ausgebildet ist, den Grundkörper (10) mit dem elektrischen Leiter (11) relativ zu sich oder sich relativ zu dem Grundkörper (10) mit dem elektrischen Leiter (11) entlang der Längsachse (X) zu bewegen.

9. Fixiervorrichtung (2) nach einem der Ansprüche 5 bis 8, **dadurch gekennzeichnet, dass**
das Aufbringelement (23a) und das Trennelement (23b) als gemeinsame Fixiereinheit (23) ausgebildet sind,
wobei die Fixiereinheit (23) ausgebildet ist, um den Grundkörper (10) mit dem elektrischen Leiter (11) zu rotieren.

## Claims

1. Method for producing a heatable hose (1), comprising at least the steps:
providing a main body (10),
applying at least one electric conductor (11) to the main body (10) along a longitudinal axis (X) and
applying a fixing element (12) to the main body (10) having the electric conductor (11) along the longitudinal axis (X),
wherein the application of the fixing element (12) to the main body (10) and the electric conductor (11) is interrupted at a first position (P1) and continued at a second position (P2),
severing the heatable hose (1) at a third position (P3) along the longitudinal axis (X),
wherein the third position (P3) is located between the first position (P1) and the second position (P2) along the longitudinal axis (X).

2. Method according to Claim 1, **characterized in that**
the third position (P3) is located centrally between the first position (P1) and the second position (P2) along the longitudinal axis (X).

3. Method according to one of the preceding claims, **characterized in that**
the first position (P1) corresponds to the length of a heatable hose (1) to be produced.

4. Method according to one of the preceding claims, **characterized in that**
the distance between the first position (P1) and the second position (P2) corresponds to twice the length of a portion of the electric conductor (11) that is to be exposed.

5. Fixing device (2) for producing a heatable hose (1) by means of a method according to one of the preceding claims
having an application element (23a) which is designed to apply a fixing element (12) to a main body (10) having an electric conductor (11) of the heatable hose (1) along a longitudinal axis (X),
additionally having a severing element (23b), which is designed to sever the fixing element (12),
wherein the application element (23a) is designed to interrupt the application of the fixing element (12).

6. Fixing device (2) according to Claim 5, **characterized in that** the application element (23a) is designed to be placed on the main body (10) having the electric conductor (11) and to be lifted off the main body (10) having the electric conductor (11).

7. Fixing device (2) according to Claim 5 or 6, **characterized in that**
the application element is designed to apply the fixing element (12) as a wrapping to the main body (10) having the electric conductor (11) of the heatable hose (1).

8. Fixing device (2) according to one of Claims 5 to 7, **characterized in that**
the fixing device (2) is designed to move the main body (10) having the electric conductor (11) relative to itself or relative to the main body (10) having the electric conductor (11) along the longitudinal axis (X).

9. Fixing device (2) according to one of Claims 5 to 8, **characterized in that**
the application element (23a) and the severing element (23b) are designed as a common fixing unit (23),
wherein the fixing unit (23) is designed to rotate around the main body (10) having the electric conductor (11).

## Revendications

1. Procédé permettant de fabriquer un tuyau chauffable (1), comprenant au moins les étapes consistant à :
fournir un corps de base (10),
appliquer au moins un conducteur électrique (11) au corps de base (10) le long d'un axe longitudinal (X), et
appliquer un élément de fixation (12) au corps de base (10) muni du conducteur électrique (11) le long de l'axe longitudinal (X),
dans lequel l'application de l'élément de fixation (12) au corps de base (10) et au conducteur électrique (11) est interrompue au niveau d'une première position (P1) et continue au niveau d'une deuxième position (P2),
sectionner le tuyau chauffable (1) au niveau d'une troisième position (P3) le long de l'axe longitudinal (X),
dans lequel la troisième position (P3) est située le long de l'axe longitudinal (X) entre la première position (P1) et la deuxième position (P2).

2. Procédé selon la revendication 1, **caractérisé en ce que** la troisième position (P3) est située le long de l'axe longitudinal (X) au milieu entre la première position (P1) et la deuxième position (P2).

3. Procédé selon l'une quelconque des revendications précédentes, **caractérisé en ce que** la première position (P1) correspond à la longueur d'un tuyau chauffable (1) à fabriquer.

4. Procédé selon l'une quelconque des revendications précédentes, **caractérisé en ce que** la distance entre la première position (P1) et la deuxième position (P2) correspond à deux fois la longueur d'un tronçon à dénuder du conducteur électrique (11).

5. Dispositif de fixation (2) permettant de fabriquer un tuyau chauffable (1) au moyen d'un procédé selon l'une quelconque des revendications précédentes, comprenant un élément d'application (23a) qui est réalisé pour appliquer un élément de fixation (12) à un corps de base (10) muni d'un conducteur électrique (11) du tuyau chauffable (1) le long d'un axe longitudinal (X), comprenant en outre un élément de sectionnement (23b) qui est réalisé pour sectionner l'élément de fixation (12),
dans lequel l'élément d'application (23a) est réalisé pour interrompre l'application de l'élément de fixation (12).

6. Dispositif de fixation (2) selon la revendication 5, **caractérisé en ce que** l'élément d'application (23a) est réalisé pour être posé sur le corps de base (10) muni du conducteur électrique (11) et pour être retiré du corps de base (10) muni du conducteur électrique (11).

7. Dispositif de fixation (2) selon la revendication 5 ou 6, **caractérisé en ce que** l'élément d'application est réalisé pour appliquer l'élément de fixation (12) au corps de base (10) muni du conducteur électrique (11) du tuyau chauffable (1) par enroulement.

8. Dispositif de fixation (2) selon l'une quelconque des revendications 5 à 7, **caractérisé en ce que** le dispositif de fixation (2) est réalisé pour déplacer le corps de base (10) muni du conducteur électrique (11) par rapport à soi-même ou pour se déplacer par rapport au corps de base (10) muni du conducteur électrique (11) le long de l'axe longitudinal (X).

9. Dispositif de fixation (2) selon l'une quelconque des revendications 5 à 8, **caractérisé en ce que** l'élément d'application (23a) et l'élément de sectionnement (23b) sont réalisés comme une unité de fixation (23) commune,
dans lequel l'unité de fixation (23) est réalisée pour faire tourner le corps de base (10) muni du conducteur électrique (11).
